# EUROPEAN PATENT APPLICATION

(11) **EP 4 768 381 A1**
(43) Date of publication of application: **01.07.2026**
(21) Application number: 25212673.5
(22) Date of filing: 31.10.2025
(51) Int. Cl.: B63H 9/02

(54) **WIND PROPULSION DEVICE**

(30) Priority: 24.12.2024 JP 2024227229
(71) Applicant: Nabtesco Corporation, Tokyo 102-0093 (JP)
(72) Inventor: Hashimoto, Hiroaki, Chiyoda-ku, Tokyo, 102-0093 (JP)
(74) Representative: Grünecker Patent- und Rechtsanwälte PartG mbB

(57) **Abstract**

A wind propulsion device (1) installed on a ship (2) and configured to generate propulsive force by receiving wind, the wind propulsion device (1) including: a rotor sail body (111) that can rotate around an axis (RC) extending vertically from the hull (3); and a lower cylindrical portion (112) having a cylindrical shape that is provided between the hull (3) and the rotor sail body (111), connected to a lower part of the rotor sail body (111), and configured to rotate integrally with the rotor sail body (111).

## Description

### TECHNICAL FIELD

The present invention relates to a wind propulsion device.

### BACKGROUND

Patent Literature 1 discloses a wind powered sailing ship equipped with vertical blades, which are rotatable around a vertical shaft and configured in the form of a windmill, and a propeller connected to the vertical shaft. A trailing edge of the vertical blade is connected to a wire extending from an axis that is disposed eccentrically to the rotation axis of a leading edge of the vertical blade in a downwind direction. The vertical blades are each configured to pivot freely around the rotational axis of its leading edge. Patent Literature 2 discloses a wind power generator including a main shaft extending in the vertical direction, an upper bearing provided on the upper portion of the main shaft, a lower bearing provided on the lower portion of the main shaft, a frame connected to the main shaft via the upper and lower bearings, blades attached to the main shaft, a motor shaft connected to the main shaft via the lower bearing, and a generator connected to the motor shaft.

### RELEVANT REFERENCE

### LIST OF RELEVANT PATENT LITERATURE

Patent Literature 1: Japanese Patent Application Publication No. Hei 6-199287
Patent Literature 2: Chinese Patent Application Publication No. 101684778

### SUMMARY

In the case of a sailing ship intended to be propelled by wind as in Patent Literature 1 and provided with vertical blades that rotate around a main shaft extending in the vertical direction as in Patent Literature 2, a larger thickness of the bearing portion for stabilizing the main shaft results in a smaller size of the vertical blades, failing to efficiently obtain propulsive force based on the Magnus effect.

The present invention is intended to overcome the above problem, and one object thereof is to provide a wind propulsion device that can efficiently obtain propulsive force based on the Magnus effect.

To overcome the above problem, aspects of the present invention are configured as follows. (1) A wind propulsion device according to an aspect of the invention is a wind propulsion device installed on a ship and configured to generate propulsive force by receiving wind, the wind propulsion device comprising: a rotor sail body capable of rotating around an axis extending in a vertical direction from a hull; and a lower cylindrical portion having a cylindrical shape that is provided between the hull and the rotor sail body, connected to a lower part of the rotor sail body, and configured to rotate integrally with the rotor sail body.

According to this configuration, since the lower cylindrical portion rotates integrally with the rotor sail body, the lower cylindrical portion also exhibits the Magnus effect to generate propulsive force. Thus, it is possible to efficiently obtain propulsive force based on the Magnus effect.
(2) The wind propulsion device of (1) above may further comprise a bearing that rotatably supports the rotor sail body, wherein the lower cylindrical portion may be disposed to surround the bearing.
(3) The wind propulsion device of (2) above may further comprise a bracket disposed to surround the bearing and fixed to the hull, wherein the lower cylindrical portion may be disposed to surround the bracket.
(4) The wind propulsion device of (3) above may further comprise a drive unit configured to rotate the rotor sail body, wherein the bracket may be disposed to cover the drive unit.
(5) In the wind propulsion device of (3) or (4) above, the bracket may include: a body cylinder having a cylindrical shape that surrounds the bearing and extends in the vertical direction; and a flange having an annular shape that extends radially outward from a lower end of the body cylinder and fixed to an upper surface of the hull, and a lower end of the lower cylindrical portion may be located radially outward of an outer circumferential edge of the flange.
(6) In the wind propulsion device of (5) above, the lower end of the lower cylindrical portion may be located below an upper end of the body cylinder in the vertical direction.
(7) In the wind propulsion device of (5) or (6) above, the bracket may further include a stepped portion having a stepped shape that extends radially inward from an upper end of the body cylinder and then extends upward in the vertical direction.

### ADVANTAGEOUS EFFECTS

According to the present invention, it is possible to efficiently obtain propulsive force based on the Magnus effect.

### BRIEF DESCRIPTION OF THE DRAWINGS

Fig. 1 is a perspective view showing a wind propulsion system according to a first embodiment.
Fig. 2 is a diagram showing an example of functional configuration of the wind propulsion system according to the first embodiment.
Fig. 3 is a diagram showing an example of flow of energy and the like in the wind propulsion system, along with a comparative example.
Fig. 4 is a perspective view showing a rotor sail body in the wind propulsion device according to the first embodiment.
Fig. 5 shows the flow velocity distribution in the case of eight blades.
Fig. 6 illustrates propulsion in the case of eight blades.
Fig. 7 follows Fig. 6 to illustrate propulsion in the case of eight blades.
Fig. 8 shows a lower cylindrical portion of the wind propulsion device according to the first embodiment.
Fig. 9 is a side view showing the lower cylindrical portion of the wind propulsion device according to the first embodiment, including a longitudinal section thereof.
Fig. 10 illustrates an effect of labyrinth structures according to the first embodiment.
Fig. 11 shows a wind propulsion device according to a second embodiment.
Fig. 12 shows a wind propulsion device according to a third embodiment.

### DESCRIPTION OF THE PREFERRED EMBODIMENTS

Embodiments of a wind propulsion device and a wind propulsion system according to the present invention will now be described with reference to the accompanying drawings. In the following description, terms such as "parallel," "orthogonal," "center" and "coaxial" describe relative or absolute positions. These terms not only strictly mean such positions but also allow some tolerances and relative differences in angle and distance as long as the same effects can be still produced. In the drawings used for the following description, members are shown to different scales into recognizable sizes.

### <Wind Propulsion System>

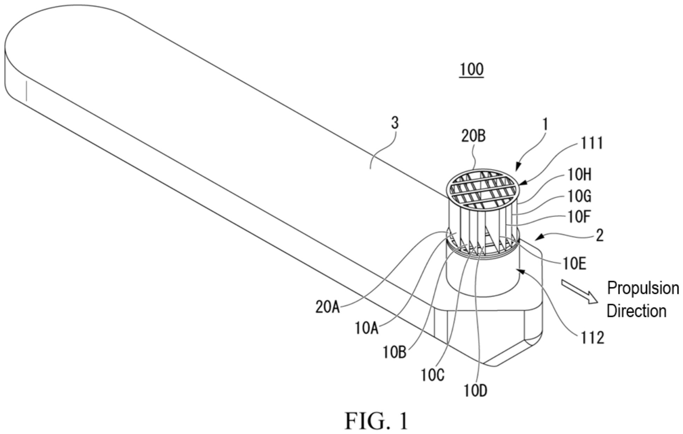

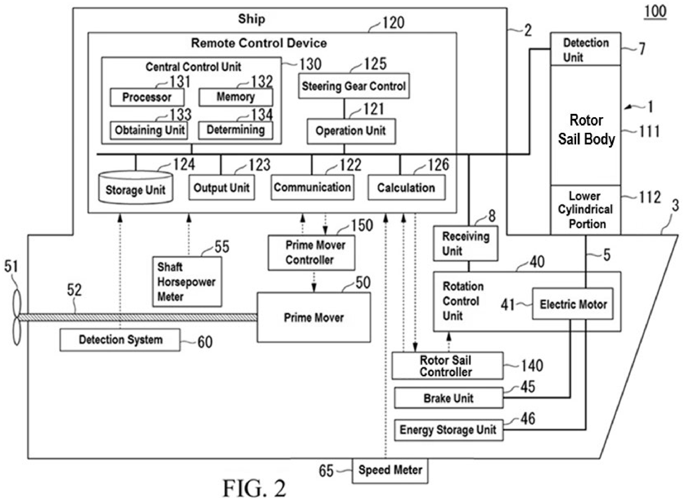

Fig. 1 is a perspective view showing a wind propulsion system 100 according to a first embodiment. Fig. 2 is a diagram showing an example of functional configuration of the wind propulsion system 100 according to the first embodiment. Referring to Figs. 1 and 2 together, the wind propulsion system 100 includes a wind propulsion device 1, which is installed on a ship 2 to generate propulsive force by receiving wind, and a rotor sail controller 140 (an example of a wind power controller) for controlling the wind propulsion device 1.

The wind propulsion device 1 includes a rotor sail body 111 that can rotate around an axis extending vertically from a hull 3, and a lower cylindrical portion 112 having a cylindrical shape that is provided between the hull 3 and the rotor sail body 111, connected to the lower part of the rotor sail body 111, and configured to rotate integrally with the rotor sail body 111. The wind propulsion device 1 further includes an electric motor 41 (an example of a drive unit) that rotates the rotor sail body 111. The rotor sail body 111 is equipped with an assembly 4 that includes a plurality of blades 10A to 10H that are shaped like plates and connected together so as to be integrally rotatable around a rotation axis.

The wind power controller 140 includes a speed meter 65 for acquiring the moving speed of the ship 2, a detection unit 7 for acquiring wind condition information including the current wind speed and wind direction in the area where the ship 2 is located, a calculation unit 126 for calculating the relative wind direction on the wind propulsion device 1 based on the acquired moving speed of the ship 2 and the wind condition information, and a rotation control unit 40 for controlling the electric motor 41 to adjust the rotation speed of the rotor sail body 111 according to the calculated relative wind direction. The wind propulsion device 1, which is included in the wind propulsion system 100, serves as a rotor sail that propels the ship 2 by generating a lift when receiving the wind.

The wind propulsion system 100 includes: the above-mentioned wind propulsion device 1 having the rotor sail body 111, the lower cylindrical portion 112, the detection unit 7, a receiving unit 8, and the rotation control unit 40; a remote control device 120 equipped with an operation unit 121 that is operated to control a propulsion speed of the ship 2, and a determination unit 134 that determines a target thrust of the wind propulsion device 1 and a target thrust of a propeller 51 driven by a prime mover 50 attached to the ship 2 in accordance with an operation position of the operation unit 121; a rotor sail controller 140 that controls the rotational speed of the rotor sail body 111 rotating around the rotation axis in accordance with the target thrust of the wind propulsion device 1; and a prime mover controller 150 that controls a rotational speed of the prime mover 50 in accordance with the target thrust of the propeller 51. The wind propulsion system 100 constitutes a system (ship integrated propulsion system) that performs integrated control of two types of propulsion: propulsion by the wind propulsion device 1 and propulsion by the propeller 51 driven by the prime mover 50.

The ship 2 is equipped with the remote control device 120, the prime mover 50, a shaft 52, the propeller 51, a shaft horsepower meter 55, a detection system 60, the speed meter 65, and the prime mover controller 150. Note that the ship 2 is not necessarily a ship operated by crew members. For example, the ship 2 may be a ship capable of autonomous navigation.

The remote control device 120 executes a program (hereinafter referred to as a "ship control program") that controls the operation of the ship 2. The remote control device 120 functions, by executing the ship control program, as a device that includes a central control unit 130, the operation unit 121, a communication unit 122, an output unit 123, the calculation unit 126, and a storage unit 124. The remote control device 120 includes the central control unit 130 that controls operations of each functional unit of the remote control device 120.

The central control unit 130 includes, for example, a memory 132 and a processor 131 such as a CPU (Central Processing Unit) that are connected to each other via a bus. The processor 131 reads a ship control program stored in the storage unit 124 and stores the read ship control program in the memory 132. The processor 131 executes the ship control program stored in the memory 132.

The central control unit 130 communicates with the prime mover controller 150 by controlling the operation of the communication unit 122, for example. The central control unit 130 obtains information inputted via the operation unit 121, for example. The central control unit 130 records information generated by the execution of the ship control program in the storage unit 124, for example. The central control unit 130 obtains, for example, the number of revolutions of the prime mover 50. The central control unit 130 outputs, for example, the obtained number of revolutions to the prime mover controller 150. In the following description, an actual value of the number of revolutions of the prime mover 50 obtained (determined) by the central control unit 130 is also referred to as an "actual number of revolutions."

The operation unit 121 is a steering handle used to control both the speed and traveling direction of the ship 2. The operation unit 121 receives input from a crew. The crew inputs either one or both of a target number of revolutions or a rotational direction of an engine into the remote control device 120 by operating the operation unit 121. The target number of revolutions is a target number of revolutions of the prime mover 50. The rotational direction of the engine is the rotational direction of the prime mover 50. The rotational direction of the prime mover 50 is either forward or reverse. The traveling direction of the ship 2 with the prime mover 50 rotating in the forward direction is opposite to the traveling direction of the ship 2 with the prime mover 50 rotating in the reverse direction.

The operation unit 121 outputs the target number of revolutions indicated by the result of the crew's operation into the central control unit 130. The operation unit 121 outputs information indicating the engine rotational direction indicated by the result of the crew's operation (hereinafter referred to as "rotational direction information") to the central control unit 130. Note that the operation unit 121 does not necessarily need to be operated by crews. For example, when the ship 2 operates autonomously, the operation unit 121 may be operated by the central control unit 130 in accordance with a ship control program.

The communication unit 122 includes a communication interface for connecting the remote control device 120 to the shaft horsepower meter 55, the detection system 60, the speed meter 65, and the prime mover controller 150. The communication unit 122 communicates with the shaft horsepower meter 55, the detection system 60, the speed meter 65, and the prime mover controller 150 via either wired or wireless communication. The communication unit 122 transmits, for example, the target number of revolutions, the actual number of revolutions, and the rotational direction information to the prime mover controller 150.

The output unit 123 includes output devices such as display devices including CRT (Cathode Ray Tube) displays, liquid crystal displays, and organic EL (Electro-Luminescence) displays, as well as audio output devices such as speakers. The output unit 123 may be configured as an interface for connecting these output devices to the device in which the output unit is included. The output unit 123 outputs information related to the remote control device 120. The output unit 123 outputs, for example, results of operations performed via the operation unit 121.

The calculation unit 126 includes a processor such as a CPU (Central Processing Unit) (an example of a processing unit) connected by a bus. The calculation unit 126 calculates various information related to the remote control device 120. The calculation unit 126 calculates, for example, the relative wind direction on the wind propulsion device 1 based on the obtained traveling speed of the ship 2 and wind condition information.

The storage unit 124 is formed of storage devices such as magnetic hard disk devices and semiconductor storage devices. The storage unit 124 stores various information related to the remote control device 120. The storage unit 124 stores, for example, a ship control program in advance. The storage unit 124 stores information generated by execution of the ship control program, for example. The storage unit 124 stores, for example, a history of operations performed by crew members through the operation unit 121. The storage unit 124 stores, for example, a history of the actual number of revolutions of the prime mover 50.

The prime mover 50 is an engine that generates propulsive force for the ship 2. The prime mover 50 converts the energy contained in fuel into motive power. Any types of fuel and operating mechanism can be used provided that the prime mover 50 is able to convert the energy contained in fuel into the motive power. The prime mover 50 is, for example, a two-stroke diesel engine. Alternatively, the prime mover 50 may be, for example, a four-stroke diesel engine or a gas engine. For the sake of explanatory convenience, an example of the ship 2 in which the prime mover 50 is a two-stroke engine will be described.

The shaft 52 is rotated by the power produced by the prime mover 50. The number of rotations of the shaft 52 is proportional to the number of revolutions of the prime mover 50. The rotation of the shaft 52 transmits the power produced by the prime mover 50 to the propeller 51.

The propeller 51 is rotated by the power generated by the prime mover 50. The rotation of the propeller 51 produces the propulsive force that moves the ship 2.

The shaft horsepower meter 55 measures the power produced by the prime mover 50. The shaft horsepower meter 55 measures the power produced by the prime mover 50 by, for example, detecting a torsional strain produced in the shaft 52 by one or both of electrical and optical methods.

The detection system 60 includes a sensor that detects the number of revolutions of the prime mover 50. The detection system may include, for example, a proximity sensor. The proximity sensor may be configured to output an on-signal when metal is situated within a certain distance and an off-signal when metal is not situated within the certain distance. In this case, the proximity sensor outputs an on-signal when, for example, a convex portion provided on the surface of the shaft 52 is situated within a detection range and an off-signal when a concave portion provided in the surface of the shaft 52 is situated within the detection range. The detection system 60 may detect the number of revolutions of the prime mover 50 based on such changes in the output of the proximity sensor and the information obtained in advance indicating the interval between the concave portion and convex portion of the shaft 52.

The detection system 60 may include other types of devices, in place of the proximity sensor. For example, the detection system 60 may include an encoder, a sensor that detects engine sound, or a sensor that detects engine vibration.

The speed meter 65 measures the speed of the ship 2. The speed meter 65 uses, for example, the Doppler effect for measuring the speed of the ship. The ship speed measured by the speed meter 65 is specifically the ship's speed relative to the water.

The prime mover controller 150 controls the operation of the prime mover 50. The prime mover controller 150 determines the amount of the fuel to be injected and the timing of the fuel injection based on the actual number of revolutions obtained by the determination unit 134. The prime mover controller 150 controls the operation of the prime mover 50 so that the determined amount of fuel is injected at the determined timing. The prime mover controller 150 controls the operation of the prime mover 50 by executing a fuel feed calculation process, fuel feed control process, and rotational direction control process.

In the fuel feed calculation process, the amount of fuel to be fed to the prime mover 50 (hereinafter also referred to as "fuel feed") is calculated based on the target number of revolutions and the actual number of revolutions, using a predetermined fuel feed calculation function. The fuel feed calculation function is a function that uses the target number of revolutions and the actual number of revolutions as explanatory variables, and the fuel feed as an objective variable. The prime mover controller 150 calculates the fuel feed by executing the fuel feed calculation process.

In the fuel feed control process, the degree of opening and closing of a valve attached to a fuel feed pipe is controlled so that the fuel feed calculated by the fuel feed calculation process is accomplished to the prime mover 50. The fuel feed pipe is a pipe connecting the prime mover 50 and an unshown fuel tank, through which the fuel flows from the fuel tank to the prime mover 50. The prime mover controller 150 feeds the fuel from the fuel tank to the prime mover 50 by executing the fuel feed control process.

In the rotational direction control process, the rotational direction of the prime mover 50 is controlled to the rotational direction of the engine. The rotational direction control process is, for example, a process of switching the rotational direction of the prime mover 50 between forward and reverse by operating a clutch of the prime mover 50. The prime mover controller 150 controls the rotational direction of the prime mover 50 to the rotational direction of the engine by executing the rotational direction control process.

The direction of a torque outputted by the prime mover 50 is in accordance with the rotational direction of the prime mover 50. Therefore, the direction of the torque occurring when the rotational direction of the prime mover 50 is forward is opposite to the direction of the torque occurring when the rotational direction of the prime mover 50 is reverse. The power produced by the prime mover 50 is equal to the value obtained by multiplying the magnitude of the torque outputted from the prime mover 50 by the number of revolutions of the prime mover 50.

The central control unit 130 is further provided with an obtaining unit 133 and the determination unit 134. The obtaining unit 133 obtains the results of detections performed by the detection system 60 via the communication unit 122. The determination unit 134 obtains the power measured by the shaft horsepower meter 55 via the communication unit 122. The obtaining unit 133 obtains the ship speed measured by the speed meter 65 via the communication unit 122. The obtaining unit 133 obtains the fuel feed calculated by the prime mover controller 150 via the communication unit 122. The obtaining unit 133 obtains the target number of revolutions and the rotational direction information outputted by the operation unit 121 via the communication unit 122.

The determination unit 134 executes a number-of-revolutions determination process. The number-of-revolutions determination process determines the actual number of revolutions of the prime mover 50 from one of values of the number of revolutions obtained by the detection system 60, based on at least one of the target number of revolutions, state information, which is information about the state of the prime mover 50, or the speed of the ship 2. Examples of the possible actual number of revolutions include a first number of revolutions and a second number of revolutions. The state information includes, for example, the fuel feed. The state information includes, for example, the power measured by the shaft horsepower meter 55.

The central control unit 130 outputs the actual number of revolutions determined by the determination unit 134 to the prime mover controller 150 via the communication unit 122. The central control unit 130 outputs the rotational direction information to the prime mover controller 150 via the communication unit 122. The central control unit 130 outputs the target number of revolutions to the prime mover controller 150 via the communication unit 122. The central control unit 130 controls the operation of the output unit 123 and causes the output unit 123 to output information.

### <Flow of Energy in Wind Propulsion System>

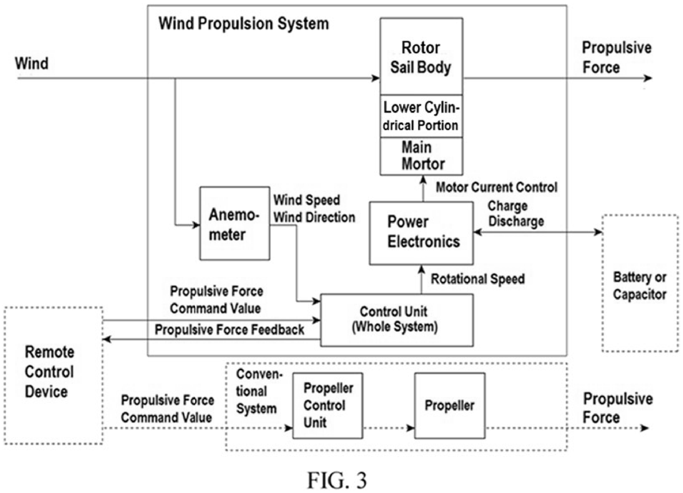

Fig. 3 is a diagram showing an example of flow of energy and the like in the wind propulsion system 100, along with a comparative example. In Fig. 3, the flow of physical objects, the flow of information, and the electrical flow (an example of a flow of energy and the like) are indicated by various arrows.

As shown in Fig. 3, in the comparative example (conventional system), the force of the wind is once converted to rotational force to turn the propeller. Therefore, in the comparative example, the force conversion results in a reduction of propulsion efficiency. In contrast, the wind propulsion system 100 of the embodiment has the rotor sail regarded as a propeller and uses directly as a propulsive force the lift (Magnus force) generated by the rotor sail rotating with the force of the wind. In other words, the wind propulsion system 100 of the embodiment uses the wind directly as a propulsive force. Therefore, the wind propulsion system 100 of the embodiment provides an improved propulsion efficiency compared to the comparative example.

Thus, in the wind propulsion system 100 of the embodiment, the wind is received by the rotor sail and converted into a propulsive force. For example, just as a sailing ship receives the wind in its sails and converts it into a propulsive force, a rotor sail ship converts the wind directly into a propulsive force with its rotor sail. The wind propulsion system 100 of the embodiment is characterized by converting the wind into a propulsive force as a sailing ship. In the wind propulsion system 100 of the embodiment, the performance of the rotor sail as a sail is superior to that of a conventional rigid-wing sail.

### <Electric Motor>

Referring to Figs. 2 to 4, the rotation control unit 40 includes an electric motor 41 capable of rotationally driving the rotor sail body 111. The electric motor 41 enables both the driving of the rotation of the rotor sail body 111 around a rotation axis and the acceleration and deceleration of the rotation of the rotor sail body 111. In other words, the electric motor 41 enables both the driving of the rotation of the blades 10A to 10H around the rotation axis and the acceleration and deceleration of the rotation of the blades 10A to 10H around the rotation axis.

### <Brake Unit>

The wind propulsion system 100 further includes a brake unit 45 that brakes the rotation of the blades 10A to 10H around the rotation axis when the wind speed exceeding a threshold is detected by the detection unit 7. The brake unit 45 reduces the rotation speed of the blades 10A to 10H by braking the rotation of the blades 10A to 10H around the rotation axis during strong winds, thereby reducing the lift. Induced drag can also be reduced by reducing the lift during headwinds.

### <Energy Storage Unit>

The wind propulsion system 100 further includes an energy storage unit 46 that stores regenerative energy generated by the electric motor 41 when the rotation around the rotation axis is decelerated. With this configuration, it is possible to utilize the regenerative energy of the electric motor 41 stored in the energy storage unit 46. For example, the energy storage unit 46 may be configured to include a battery, capacitor, etc.

As described above, the rotor sail functions as a sail that converts the wind force into a propulsive force, and also operates as a generator capable of converting excess wind energy into electricity when the wind force exceeds propulsion commands. For example, the generated electricity may be used during propulsion or for general purposes such as lighting.

### <Obtaining Unit>

The wind propulsion system 100 further includes the obtaining unit 133 that obtains the wind speed and wind direction of the wind currently occurring. When the rotation speed of the blades 10A to 10H, which rotate only by the wind currently occurring, is below a threshold value, the rotation control unit 40 increases the rotation speed of the blades 10A to 10H rotating around the rotation axis, using the electric motor 41. For example, when the thrust that can be generated by the rotor sail rotating without energy supply based on the current wind speed and wind direction is insufficient to meet a thrust command, the thrust can be amplified by accelerating the rotation using the power of the electric motor 41.

For example, the threshold value for the rotational speed of the blades 10A to 10H (an example of a threshold value for the blade rotational speed) is calculated based on the thrust command. For example, the optimal rotational speed can be calculated from the thrust command, and based on that calculation result, the rotational speed of the blades 10A to 10H can be increased by the electric motor 41.

### <Relationship Between Rotor Sail Control And Prime Mover Control>

The thrust that the rotor sail ship can generate without auxiliary power is limited. Accordingly, any shortfall in the thrust occurring without auxiliary power may be compensated by the drive mode of the rotor sail (the rotational driving of the blades 10A to 10H). For example, any shortfall in the thrust occurring with the drive mode of the rotor sail may be compensated by the propeller 51 (propeller drive).

For example, the central control unit 130 calculates the optimal rotation speed of the blades 10A to 10H rotating around the rotation axis based on the received thrust command and the results of detection of the wind direction and wind speed conducted when the thrust command was received. For example, when controlling the rotational speed of the blades 10A to 10H, vector control can be used to control the q-axis current, enabling seamless control regardless of whether to drive or brake the blades. For example, the central control unit 130 may link the blades 10A to 10H and the propeller 51 and adjust the thrust ratio between the rotor sail and the propeller 51 to maximize energy efficiency.

As described above, the wind propulsion system 100 is a system that converts the wind force into thrust. For example, when a thrust command value is received from the remote control device 120, the optimal rotation speed of the blades 10A to 10H is calculated based on the wind direction and the wind speed so that the specified thrust is generated. Then, the electric motor 41 is controlled so that the calculated rotation speed is achieved. The rotation speed referred to here includes the direction of rotation. In the case of reverse rotation, the electric motor 41 is controlled at a negative speed.

For example, when the natural thrust of the rotor sail ship alone is insufficient, the propeller 51 is also driven. Depending on the wind direction, when the wind propulsion device 1 is more efficient than the propeller 51, the electric motor 41 is driven to increase the rotation speed and thus the thrust. On the other hand, when the propeller 51 is more efficient than the wind propulsion device 1, the wind propulsion device 1 is set to free operation mode, and the propeller 51 is driven to generate thrust. Additionally, it is also possible to drive both the electric motor 41 of the wind propulsion device 1 and the propeller 51.

For example, multiple rotor sails can be arranged on the hull to adjust the rotational moment of the ship. For example, multiple rotor sails can be arranged at the front and rear of the hull, and the rotational speeds can be made different between the front and rear rotor sails. This allows the forces acting in the lateral direction of the ship to be set to different values between the front and rear rotor sails, thereby generating a moment.

### <Steering Gear Control Unit>

Referring to Fig. 2, the wind propulsion system 100 further includes a steering gear control unit 125. When the rotation control unit 40 changes the rotational speed of the blades 10A to 10H around the rotation axis, the steering gear control unit 125 controls the steering gear to steer to a direction opposite to the inertial force generated in a direction opposite to the direction of changing the rotational speed of the blades 10A to 10H. By anticipating that the torque caused by the inertial force would impose on the hull 3, the steering gear control unit 125 cooperates with a rudder to counteract the torque and thus prevent the hull 3 from rotating.

For example, when changing the rotational speed of the blades 10A to 10H by driving or braking, it may cooperate with the rudder. For example, when the electric motor 41 is in a free state and the blades 10A to 10H are rotating freely, it may not be necessary to cooperate with the rudder. For example, when braking or driving to change the rotational speed of the blades 10A to 10H, torque may act on the hull 3, causing the hull 3 to rotate. To prevent this, when only one wind propulsion device 1 is installed, it is desirable to cooperate with the rudder to account for the torque acting on the hull 3, thereby preventing the hull 3 from rotating.

### <Wind Propulsion Device>

Referring to Figs. 1 and 2 together, the wind propulsion device 1 serves as a rotor sail which is installed on the ship 2 to generate propulsive force by receiving wind. In the illustrated example, a single wind propulsion device 1 is installed on the front part (bow) of the hull 3. The installation configuration (installation location, number of devices, etc.) of the wind propulsion device 1 is not limited to the above and can be modified in accordance with the design specifications.

### <Rotor Sail Body>

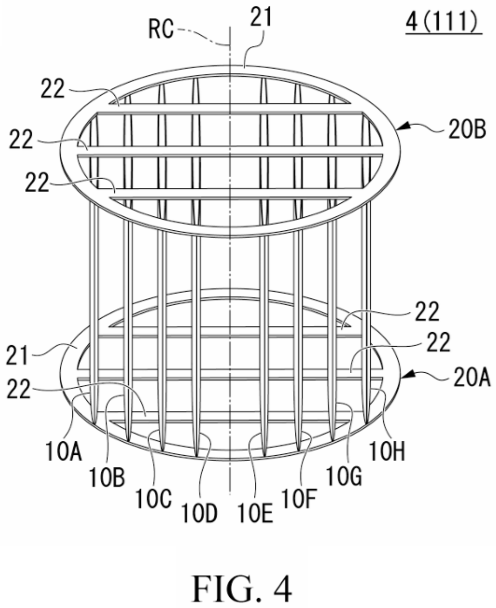

Fig. 4 is a perspective view showing a rotor sail body in the wind propulsion device 1 according to the first embodiment. Referring to Fig. 4, the wind propulsion device 1 includes the rotor sail body 111 that can rotate around the axis RC (represented by the chain line in Fig. 4) extending vertically from the hull 3. The rotor sail body 111 includes the assembly 4, which is constituted by the rotators 20A and 20B rotatable around the axis RC, and a plurality of blades 10A to 10H each shaped like a plate and fixed to the rotators 20A and 20B.

The plurality of blades 10A to 10H are arranged so that the imaginary straight lines connecting their respective opposite ends are parallel. The plurality of blades 10A to 10H are disposed so that their respective opposite ends are located on an imaginary circle around the rotation axis. The longest (innermost) one of the plurality of blades 10A to 10H is disposed so that the length of the imaginary straight line (the length from one end of the blade to the other, or what is called a chord length) is at least 1/2 the diameter of the imaginary circle around the rotation axis. The outermost one of the plurality of blades 10A to 10H may have a chord length less than 1/2 the diameter of the imaginary circle around the rotation axis. Note that the chord lengths of the plurality of blades are not limited to the above and may be modified in accordance with the design specifications.

In the illustrated example, the imaginary circle around the rotation axis is a perfect circle as viewed from the vertical direction. Note that the shape of the imaginary circle as viewed from the vertical direction is not limited to the above, but may also be elliptical, oblong, quadrangular, or a closed ring formed by connecting curves.

The rotators 20A, 20B are plate-shaped rotating plates 20A, 20B. The plurality of blades 10A to 10H are each fixed to respective one face of the rotating plates 20A, 20B. In the illustrated example, the rotating plates 20A, 20B include a lower plate 20A, to which the lower ends of the plurality of blades 10A to 10H are fixed, and an upper plate 20B, to which the upper ends of the plurality of blades 10A to 10H are fixed. For example, the lower plate 20A is fixed to the upper portion of the lower cylindrical portion 112.

The rotating plates 20A, 20B each have a frame 21 having an annular shape and a plurality of beams 22 connected at both ends thereof to the inner circumference of the frame 21 and parallel to each other. In the illustrated example, three beams 22 are connected at both ends thereof to the inner circumference of the frame 21 and are equally spaced. Note that the configuration (number and arrangement, etc.) of the beams 22 is not limited to the above and can be modified in accordance with the design specifications. For example, the configuration (shape, etc.) of the rotators 20A, 20B may be in the form of a solid disk (an example of a rotating plate) or a hollow disk. The configuration of the rotators 20A, 20B is not limited to the above and can be modified in accordance with the design specifications.

In the example shown, the assembly 4 has a single stage; however, this embodiment is not limited thereto, and the number of stages of the assembly 4 can be modified in accordance with the design specifications. For example, if assemblies 4A and 4B are provided, the assemblies 4A and 4B may have common rotators 20A and 20B. The installation configuration of the rotators 20A and 20B with respect to a plurality of assemblies 4 may be varied in accordance with the design specifications. Furthermore, the assemblies 4A and 4B may have the same shape, and the rotators 20A and 20B may be bolted or welded.

The plurality of blades 10A to 10H are blades 10A to 10H extending in the vertical direction. As viewed from the vertical direction, the plurality of blades 10A to 10H are disposed so as to be line symmetrical with respect to a center line that passes through the rotation center of the rotation axis and is parallel to the imaginary straight lines. As viewed from the vertical direction, the plurality of blades 10A to 10H are disposed so as to be line symmetrical with respect to a center line passing through the rotation center of the rotation axis and is orthogonal to the imaginary straight lines.

In the illustrated example, each of the eight blades 10A to 10H extends vertically to intersect the respective three beams 22 of the rotating plates 20A, 20B. In the illustrated example, of the eight blades 10A to 10H, the four blades 10A to 10D on one side of the rotation center are equally spaced, and the four blades 10E to 10H on the other side are equally spaced. Note that the configuration of the blades 10A to 10H (number and arrangement, etc.) is not limited to the above and may be changed depending on the design specifications.

### <Propulsion with Eight Blades>

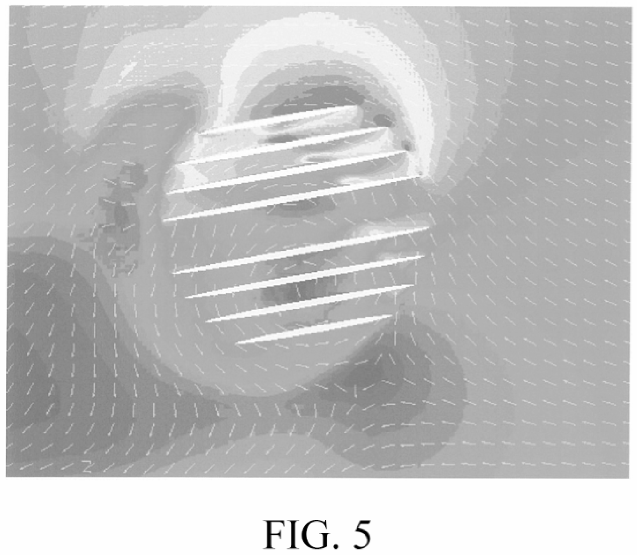

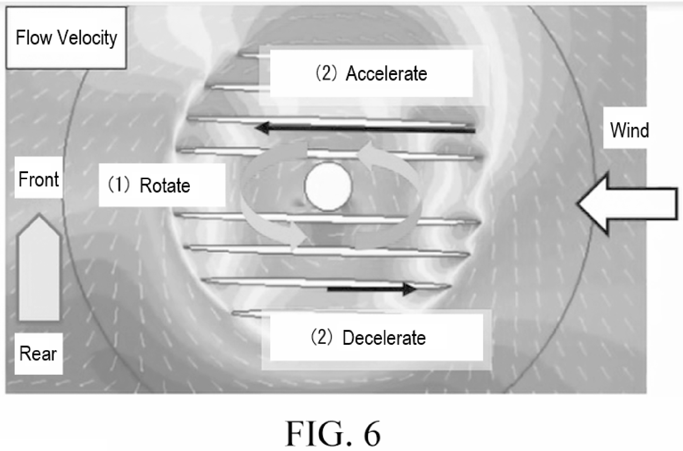

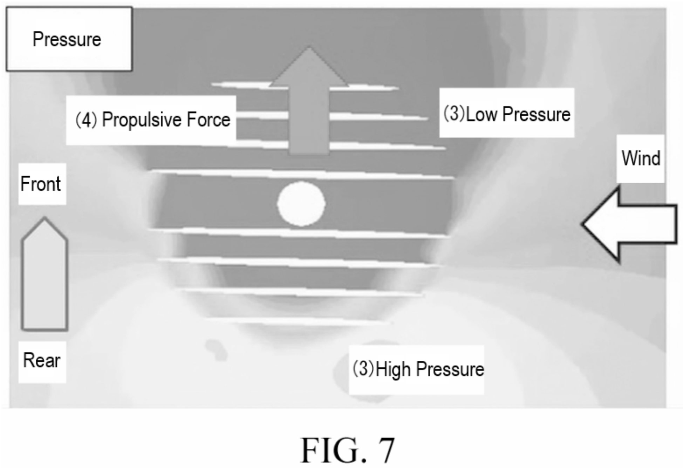

Fig. 5 shows the flow velocity distribution in the case of eight blades. Fig. 6 illustrates propulsion in the case of eight blades. Fig. 7 follows Fig. 6 to illustrate propulsion in the case of eight blades. In the illustrated example, a pillar is shown at the rotation center of the rotation axis, but this pillar may be absent.

Referring to Figs. 5 to 7 together, the eight blades rotate regardless of wind direction. In the eight blades, the portions in front of the rotation center is aligned with the rotational direction, and thus the wind on the front side is accelerated and the wind on the rear side is decelerated. Then, based on Bernoulli's theorem, the pressure on the front side decreases, and the pressure on the rear side increases. This pressure difference generates a propulsive force orthogonal to the wind direction. This propulsive force is called the Magnus force. When the wind direction is opposite, the rotational direction is reversed. Strictly speaking, the Magnus force is a force generated by the rotation of a cylinder or a sphere, but because the mechanism of force generation is similar, the propulsive force generated by parallel blades is also referred to as the Magnus force. The Magnus force is also called lift because it acts in a direction orthogonal to the wind.

In this embodiment, the eight blades are disposed so that their respective opposite ends are located on an imaginary circle around the rotation axis, and the imaginary straight lines connecting their respective opposite ends are parallel. This allows for a larger propulsive force to be generated than in the case of seven or fewer blades. Depending on the Reynolds number, that is, factors such as size and wind speed, the propulsive force tends to increase as the number of blades is larger. For example, the plurality of blades may include 18 blades.

### <Lower Cylindrical Portion >

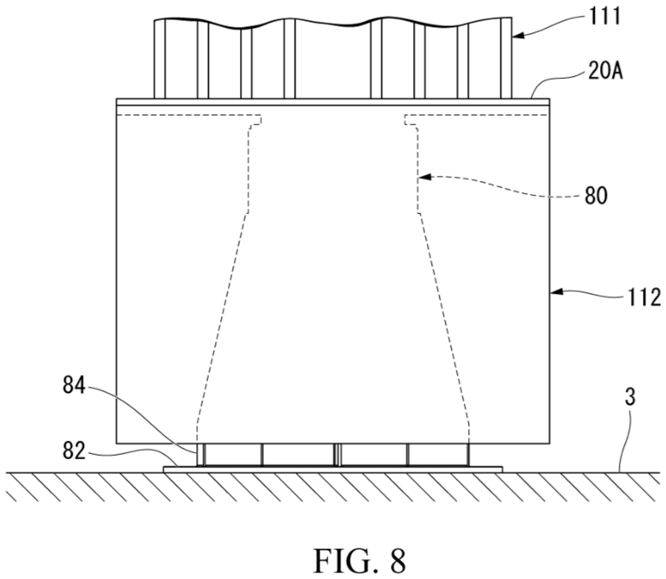

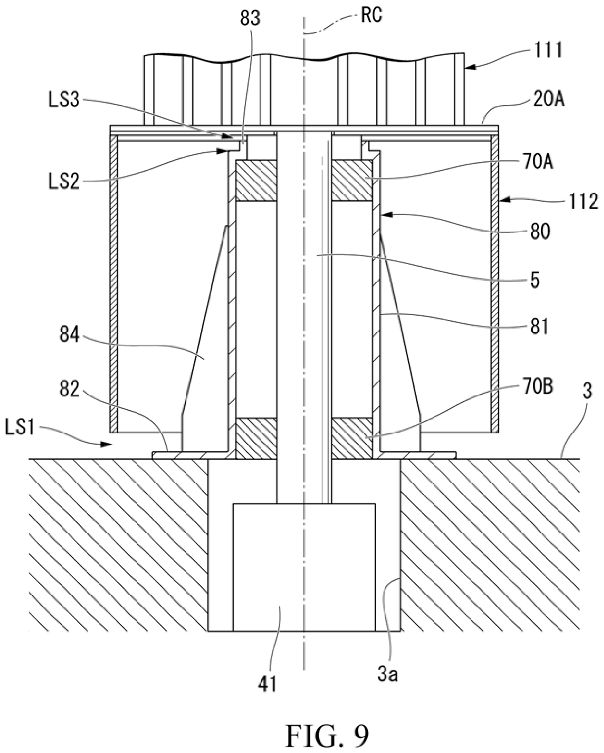

Fig. 8 shows the lower cylindrical portion 112 of the wind propulsion device 1 according to the first embodiment. Fig. 9 is a side view showing the lower cylindrical portion 112 of the wind propulsion device 1 according to the first embodiment, including a longitudinal section thereof. Referring to Figs. 8 and 9 together, the lower cylindrical portion 112 is provided between the hull 3 and the rotor sail body 111. The lower middle portion of the rotor sail body 111 is connected with the upper end of a vertical shaft 5, which extends in the vertical direction. The lower end of the vertical shaft 5 is connected with an output shaft of the electric motor 41. The rotor sail body 111 rotates integrally with the vertical shaft 5, by the rotational driving of the electric motor 41.

The lower cylindrical portion 112 is connected to the lower portion of the rotor sail body 111. The lower cylindrical portion 112 rotates integrally with the rotor sail body 111. The lower cylindrical portion 112 is shaped like a cylinder around the axis RC (represented by the chain line in Fig. 9) extending vertically from the hull 3. The lower cylindrical portion 112 functions as a cylindrical blade of the rotor sail body 111.

The radial center of the lower cylindrical portion 112 is coaxial with the vertical shaft 5. The lower cylindrical portion 112 is connected to the lower plate 20A of the rotor sail body 111. The outer shape of the lower cylindrical portion 112 may be the same as that of the lower plate 20A of the rotor sail body 111 as viewed from the vertical direction. The lower cylindrical portion 112 may be bolted or welded to the lower plate 20A of the rotor sail body 111.

The height of the lower cylindrical portion 112 is, for example, preferably 3 meters or larger, and more preferably 4 meters or larger. The height of the lower cylindrical portion 112 corresponds to the vertical distance from the upper surface of the hull 3 to the upper end of the lower cylindrical portion 112.

Since the wind propulsion device 1 installed on the deck of the hull 3 may be exposed to waves during navigation, the height at which waves may reach can be defined as the height of the lower cylindrical portion 112. In addition, to prevent objects from coming into contact with the rotor sail body 111 rotating, the height at which such contact may occur can also be defined as the height of the lower cylindrical portion 112. When it is difficult to provide the rotational drive mechanism of the rotor sail body 111, including the electric motor 41, inside the rotor sail body 111, the height occupied by the rotational drive mechanism provided inside the lower cylindrical portion 112 may be defined as the height of the lower cylindrical portion 112. Note that the height of the lower cylindrical portion 112 is not limited to the above and may be modified in accordance with the design specifications.

The wind propulsion device 1 further includes bearings 70A, 70B that rotatably support the rotor sail body 111. The lower cylindrical portion 112 surrounds the bearings 70A, 70B. The bearings 70A, 70B may include a plurality of bearings. In the illustrated example, two bearings 70A, 70B are provided at an interval in the vertical direction. The two bearings 70A, 70B consist of an upper bearing 70A provided on the upper end side of the vertical shaft 5 surrounded by the lower cylindrical portion 112, and a lower bearing 70B provided below the upper bearing 70A and on the hull 3 side. Note that the configuration of the bearings 70A, 70B (number and arrangement, etc.) is not limited to the above and may be changed depending on the design specifications. For example, the upper and lower bearings may be replaced with a bearing not divided into upper and lower parts (e.g., cross-roller bearing, double-row angular bearing, etc.). In this case, the height of the lower cylindrical portion 112 containing the bearing can be smaller rather than having the upper and lower bearings.

### <Bracket>

The wind propulsion device 1 further includes a bracket 80 that surrounds the bearings 70A, 70B and is fixed to the hull 3. The lower cylindrical portion 112 surrounds the bracket 80. In the illustrated example, the bracket 80 surrounds the two bearings 70A, 70B. The bracket 80 peripherally covers the upper bearing 70A and lower bearing 70B. Note that the configuration in which the bracket 80 surrounds the bearings 70A, 70B (number and arrangement, etc.) is not limited to the above and may be changed depending on the design specifications.

The bracket 80 covers the drive unit 41. In the illustrated example, the drive unit 41 is housed in a recess 3a, which is recessed downward from the upper surface of the hull 3. The drive unit 41 is located on the bottom surface of the recess 3a. The vertical shaft 5 of the rotor sail body 111 is coaxial with the output shaft of the drive unit 41. The output shaft of the drive unit 41 is connected to the vertical shaft 5 of the rotor sail body 111. The bracket 80 covers the drive unit 41 from the vertically upper side. Note that the configuration in which the bracket 80 covers the drive unit 41 (arrangement, etc.) is not limited to the above and may be changed depending on the design specifications.

The bracket 80 includes a body cylinder 81 having a cylindrical shape that surrounds the bearings 70A, 70B and extends in the vertical direction, and a flange 82 that has an annular shape extending radially outward from the lower end of the body cylinder 81 and is fixed to the upper surface of the hull 3. The flange 82 of the bracket 80 may be bolted or welded to the upper surface of the hull 3.

The bracket 80 may be provided with ribs 84 to reinforce the bracket 80. In the illustrated example, a plurality of ribs 84 are provided at intervals on the outer circumference of the body cylinder 81. Each of the ribs 84 is shaped so that its radial length increases progressively from the upper end toward the lower end of the body cylinder 81, and then extends to the upper surface of the flange 82 with a uniform radial length. Note that the configuration (number and shape, etc.) of the ribs 84 is not limited to the above and can be modified in accordance with the design specifications.

### <Labyrinth Structure>

The lower end of the lower cylindrical portion 112 is located radially outward of the outer circumferential edge of the flange 82. In the example in Fig. 9, the lower end of the lower cylindrical portion 112 is located radially outward of the outer circumferential edge of the flange 82 and vertically above the upper surface of the flange 82. The lower end of the lower cylindrical portion 112 and the outer circumferential edge of the flange 82 constitute a labyrinth structure LS1 (first labyrinth structure LS1).

The lower end of the lower cylindrical portion 112 is located vertically below the upper end of the body cylinder 81. In the example in Fig. 9, the lower end of the lower cylindrical portion 112 is located vertically below the upper end of the body cylinder 81 and vertically above the upper surface of the flange 82. The lower end of the lower cylindrical portion 112 is located vertically below the upper end of the lower bearing 70B. The lower end of the lower cylindrical portion 112 and the upper end of the body cylinder 81 constitute a labyrinth structure LS2 (second labyrinth structure LS2). The second labyrinth structure LS2 is located vertically above the first labyrinth structure LS1.

The bracket 80 further includes a stepped portion 83 having a stepped shape that extends radially inward from the upper end of the body cylinder 81 and then extends vertically upward. In the example in Fig. 9, the stepped portion 83 is located on the vertically above the upper end of the upper bearing 70A. The lower end of the lower cylindrical portion 112 and the stepped portion 83 on the upper end side of the body cylinder 81 constitute a labyrinth structure LS3 (third labyrinth structure LS3). The third labyrinth structure LS3 is located vertically above the first labyrinth structure LS1 (also above the second labyrinth structure LS2).

Since resistance would occur if the movable parts (lower cylindrical portion 112 and rotator 20A) and the stationary parts (hull 3 and bracket 80) rub against each other, a gap should be formed between the above movable parts and stationary parts when manufacturing tolerances are taken into account. If a rubber sealing member such as an O-ring is provided between the above movable parts and stationary parts, the rotational resistance will increase. Therefore, labyrinth structures with different heights are necessary for preventing water from entering the bearing parts while allowing water to enter the gap between the above movable parts and stationary parts.

### <Effect of Labyrinth Structures>

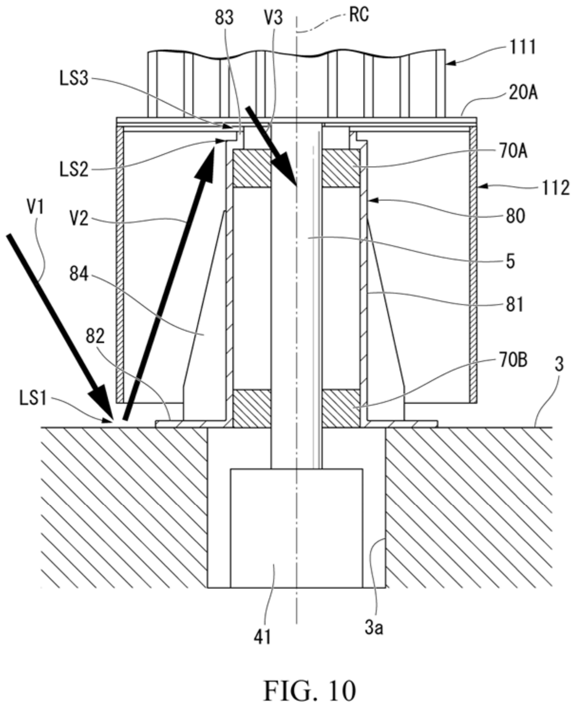

Fig. 10 illustrates an effect of the labyrinth structures LS1, LS2, LS3 according to the first embodiment. In the example in Fig. 10, arrows V1, V2, and V3 indicate one example of water ingress paths assuming that waves strike the hull 3. In this embodiment, the lower end of the lower cylindrical portion 112 and the outer circumferential edge of the flange 82 constitute the first labyrinth structure LS1, thereby inhibiting water ingress in the directions of arrows V2 and V3 even when waves strike in the direction of arrow V1 and enter the inside of the lower cylindrical portion 112.

In addition, the lower end of the lower cylindrical portion 112 and the upper end of the body cylinder 81 constitute the second labyrinth structure LS2, thereby inhibiting water ingress in the directions of arrows V2 and V3 even when waves enter the inside of the lower cylindrical portion 112. Further, the lower end of the lower cylindrical portion 112 and the stepped portion 83 on the upper end side of the body cylinder 81 constitute the third labyrinth structure LS3, thereby inhibiting water ingress in the directions of arrows V2 and V3 even when waves enter the inside of the lower cylindrical portion 112.

### <Advantageous Effects>

As described above, the wind propulsion device 1 according to this embodiment is installed on the ship 2 and configured to generate propulsive force by receiving wind, and the wind propulsion device 1 includes the rotor sail body 111 that can rotate around the axis RC extending vertically from the hull 3, and the lower cylindrical portion 112 having a cylindrical shape that is provided between the hull 3 and the rotor sail body 111, connected to the lower part of the rotor sail body 111, and configured to rotate integrally with the rotor sail body 111.

According to this configuration, since the lower cylindrical portion 112 rotates integrally with the rotor sail body 111, the lower cylindrical portion 112 also exhibits the Magnus effect to generate propulsive force. Thus, it is possible to efficiently obtain propulsive force based on the Magnus effect. In addition, since the lower cylindrical portion 112 is connected to the lower part of the rotor sail body 111, waves can be inhibited from striking the rotor sail body 111. This also inhibits objects on the sailing ship from contacting the rotor sail body 111 rotating.

The wind propulsion device 1 according to this embodiment further includes bearings 70A, 70B that rotatably support the rotor sail body 111. The lower cylindrical portion 112 surrounds the bearings 70A, 70B. According to this configuration, since the bearings 70A, 70B are surrounded by the lower cylindrical portion 112, waves can be inhibited from striking the bearings 70A, 70B.

The wind propulsion device 1 according to this embodiment further includes the bracket 80 that surrounds the bearings 70A, 70B and is fixed to the hull 3. The lower cylindrical portion 112 surrounds the bracket 80. According to this configuration, since the bearings 70A, 70B are surrounded by the bracket 80, waves can be inhibited from striking the bearings 70A, 70B even when the waves enter the inside of the lower cylindrical portion 112.

The wind propulsion device 1 according to this embodiment further includes the drive unit 41 that rotates the rotor sail body 111. The bracket 80 covers the drive unit 41. According to this configuration, since the drive unit 41 is covered by the bracket 80, waves can be inhibited from striking the drive unit 41 even when the waves enter the inside of the lower cylindrical portion 112.

The bracket 80 according to this embodiment includes the body cylinder 81 having a cylindrical shape that surrounds the bearings 70A, 70B and extends in the vertical direction, and the flange 82 that has an annular shape extending radially outward from the lower end of the body cylinder 81 and is fixed to the upper surface of the hull 3. The lower end of the lower cylindrical portion 112 is located radially outward of the outer circumferential edge of the flange 82. According to this configuration, since the lower end of the lower cylindrical portion 112 and the outer circumferential edge of the flange 82 constitute the labyrinth structure LS1, waves can be inhibited from striking the bearings 70A, 70B even when the waves enter the inside of the lower cylindrical portion 112.

The lower end of the lower cylindrical portion 112 according to this embodiment is located vertically below the upper end of the body cylinder 81. According to this configuration, since the lower end of the lower cylindrical portion 112 and the upper end of the body cylinder 81 constitute the labyrinth structure LS2, waves can be inhibited from striking the bearings 70A, 70B even when the waves enter the inside of the lower cylindrical portion 112.

The bracket 80 according to this embodiment further includes the stepped portion 83 having a stepped shape that extends radially inward from the upper end of the body cylinder 81 and then extends vertically upward. According to this configuration, since the lower end of the lower cylindrical portion 112 and the stepped portion 83 on the upper end side of the body cylinder 81 constitute the labyrinth structure LS3, waves can be inhibited from striking the bearings 70A, 70B even when the waves enter the inside of the lower cylindrical portion 112.

### <Second Embodiment>

The following describes a wind propulsion device 201 according to a second embodiment. In the following description, the parts having the same functions as in the first embodiment will have the same names and reference numerals, and their functions will not be specifically described.

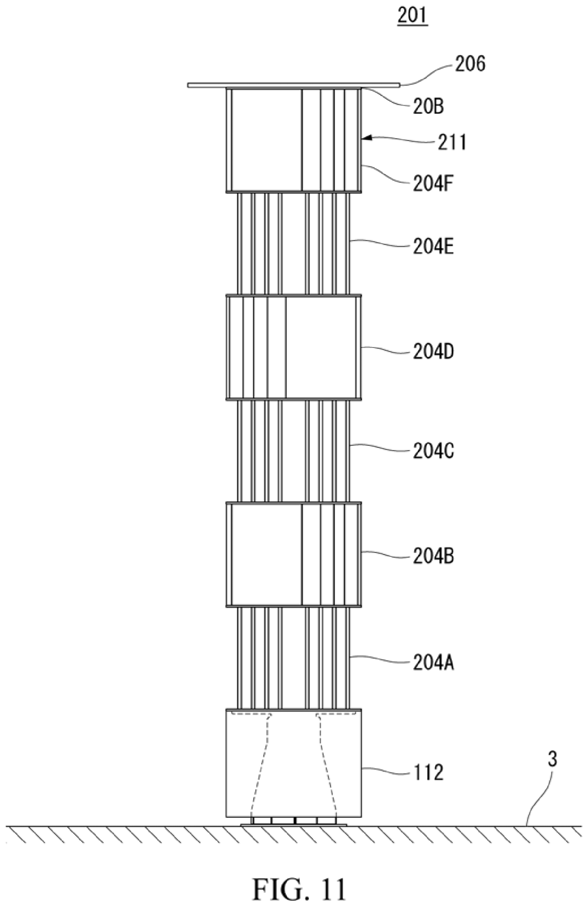

Fig. 11 shows the wind propulsion device 201 according to the second embodiment. As shown in Fig. 11, in the wind propulsion device 201 according to the second embodiment, the rotor sail body 211 includes a plurality of assemblies 204A to 204F arranged along the vertical direction. The plurality of assemblies 204A to 204F may be stacked vertically so that the height of the rotor sail body 211 is two meters or more, for example.

In the example shown in Fig. 11, there are six assemblies 204A to 204F provided along the vertical direction. Supposing that N is the number of assemblies and M is a natural number, the plurality of assemblies 204A to 204F may be positioned differently from each other by 180×M/N degrees. Note that the configuration (number and arrangement, etc.) of the plurality of assemblies 204A to 204F is not limited to the above and can be modified in accordance with the design specifications.

An end plate 206 is provided at the uppermost part of the rotor sail body 211. The outer shape of the end plate 206 may be a circle larger than the outermost shape of the rotor sail body 211 as viewed from the vertical direction. The end plate 206 may be bolted or welded to the upper plate 20B of the uppermost assembly 204F of the rotor sail body 211.

In the wind propulsion device 201 according to the second embodiment, the end plate 206 is provided at the uppermost part of the rotor sail body 211. According to this configuration, the lift can be increased.

### <Third Embodiment>

The following describes a wind propulsion device 301 according to a third embodiment. In the following description, the parts having the same functions as in the second embodiment will have the same names and reference numerals, and their functions will not be specifically described.

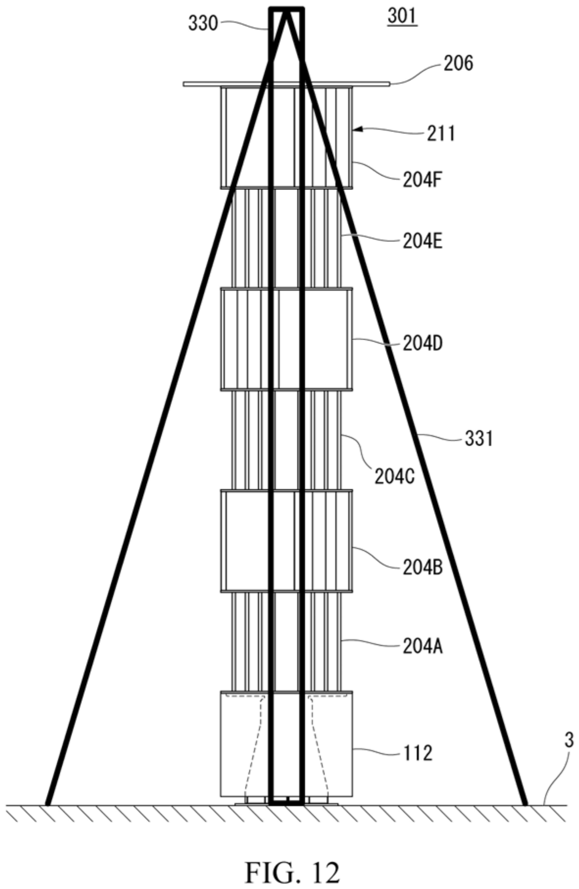

Fig. 12 shows the wind propulsion device 301 according to the third embodiment. As shown in Fig. 12, the wind propulsion device 301 according to the third embodiment includes the rotor sail body 211 with a plurality of assemblies 204A to 204F arranged along the vertical direction, a frame 330 extending vertically upward from the hull 3 and rotatably supporting the rotor sail body 211, and wires 331 stretched between the upper end of the frame 330 and the hull 3.

In the example in Fig. 12, the frame 330 extends vertically through the rotor sail body 211 and the lower cylindrical portion 112. The rotor sail body 211 is supported on the frame 330 via bearings or the like (not shown) so as to be rotatable around a rotation axis. The upper end of the frame 330 is located vertically above the end plate 206. The wires 331 are stretched in an inverted V shape. The wires 331 are stretched in such a way that the horizontal spacing between them increases progressively from the upper end of the frame 330 vertically downward. The lower ends of the wires 331 are fixed to the upper surface of the hull 3, for example.

The wind propulsion device 301 according to the third embodiment includes the rotor sail body 211 with a plurality of assemblies 204A to 204F arranged along the vertical direction, a frame 330 extending vertically upward from the hull 3 and rotatably supporting the rotor sail body 211, and wires 331 stretched between the upper end of the frame 330 and the hull 3. According to this configuration, even with the rotor sail body 211 including a plurality of assemblies 204A to 204F, the tension of the wires 331 and the frame 330 can support the rotor sail body 211 and the lower cylindrical portion 112 on the hull 3. Even when the rotor sail body 211 needs to be tilted, the load on the rotor sail body 211 can be reduced by the tension of the wires 331.

### <Modifications>

The technical scope of the present invention is not limited to the embodiments described above but is susceptible of various modifications within the purport of the present invention.

The foregoing description of the embodiments is based on an example in which the wind propulsion device further includes bearings that rotatably support the rotor sail body, and the lower cylindrical portion surrounds the bearings, but this is not limitative. For example, at least part of the bearings may be located outside (radially or axially outside) the lower cylindrical portion. The configuration in which the lower cylindrical portion surrounds the bearings may be changed in accordance with design specifications.

The foregoing description of the embodiments is based on an example in which the wind propulsion device further includes a bracket that is disposed to surround the bearings and fixed to the hull, and the lower cylindrical portion is disposed to surround the bracket, but this is not limitative. For example, at least part of the bracket may be located outside (radially outside) the lower cylindrical portion. The configuration in which the lower cylindrical portion surrounds the bracket may be changed in accordance with design specifications.

The foregoing description of the embodiments is based on an example in which the wind propulsion device further includes a drive unit for rotating the rotor sail body, and the bracket is disposed to cover the drive unit, but this is not limitative. For example, at least part of the drive unit may be located outside (radially outside) the lower cylindrical portion. The configuration in which the bracket covers the drive unit may be changed in accordance with the design specifications.

The foregoing description of the embodiments is based on an example in which the bracket includes a body cylinder having a cylindrical shape that surrounds the bearings and extends in the vertical direction, and a flange that has an annular shape extending radially outward from the lower end of the body cylinder and is fixed to the upper surface of the hull, and the lower end of the lower cylindrical portion is located radially outward of the outer circumferential edge of the flange, but this is not limitative. For example, the lower end of the lower cylindrical portion may be located radially inward of the outer circumferential edge of the flange. The positional relationship between the lower end of the lower cylindrical portion and the outer circumferential edge of the flange may be changed in accordance with design specifications.

The foregoing description of the embodiments is based on an example in which the lower end of the lower cylindrical portion is located vertically below the upper end of the body cylinder, but this is not limitative. For example, the lower end of the lower cylindrical portion may be located vertically above the upper end of the body cylinder. The positional relationship between the lower end of the lower cylindrical portion and the upper end of the body cylinder may be changed in accordance with design specifications.

The foregoing description of the embodiments is based on an example in which the bracket further includes a stepped portion having a stepped shape that extends radially inward from the upper end of the body cylinder and then extends vertically upward, but this is not limitative. For example, it is also possible that the bracket does not include the stepped portion. The configuration in which the stepped portion is installed may be changed in accordance with the design specifications.

The functions of the control unit according to the embodiments described above may be implemented in a program stored on a computer-readable storage medium, and the program stored on the storage medium may be loaded onto a computer system that then executes the program for processing. The "computer system" mentioned above may include an operating system (OS) or hardware such as peripheral devices. The "computer-readable storage medium" mentioned above refers to a storage device such as a portable medium like a flexible disc, a magneto-optical disc, a ROM (Read Only Memory), a flash memory or other writable non-volatile memory, and a DVD (Digital Versatile Disc), and a hard disk built-in to the computer system.

Further, the "computer-readable storage medium" includes storage media that retain the program for some period of time, like a volatile memory (for example, DRAM (Dynamic Random Access Memory)) in an information processing device receiving the program through a network such as the Internet or a communication line such as a telephone line, or in a computer system that operates as a client. The program mentioned above may be transmitted from a computer system that includes a storage device or the like storing the program to another computer system through a transmission medium or by a transmission wave in a transmission medium. The "transmission medium" for transmitting the program refers to a medium that operates to transmit information, like a network (communication network) such as the Internet or a communication line (communication wire) such as the telephone line. Only a part of the functions described above may be implemented in the above program. Further, the functions described above may be implemented by a combination of the above program and other programs previously stored on the computer system. That is, the above program may be what is called a difference file (a difference program).

The elements of the embodiments described above may be replaced with known elements within the purport of the present invention. Further, the modifications described above may be combined. In the embodiments disclosed herein, a member formed of multiple components may be integrated into a single component, or conversely, a member formed of a single component may be divided into multiple components. Irrespective of whether or not the components are integrated, they are acceptable as long as they are configured to attain the object of the invention. According to the foregoing embodiments disclosed herein, a plurality of functions may be distributively provided. Some or all of these functions may be integrally provided. Conversely, a different plurality of functions may be integrally provided. Some or all of these functions can be distributively provided. Irrespective of whether the functions are integrally or distributively provided, they are acceptable as long as they are configured to attain the object of the invention.

### LIST OF REFERENCE NUMBERS

1, 201, 301: wind propulsion device; 2: ship; 3: hull; 41: electric motor (drive unit); 70A, 70B: bearing; 80: bracket; 81: body cylinder; 82: flange; 83: stepped portion; 111, 211: rotor sail body; 112: lower cylindrical portion

## Claims

1. A wind propulsion device (1) installed on a ship (2) and configured to generate propulsive force by receiving wind, the wind propulsion device (1) comprising:
a rotor sail body (111) capable of rotating around an axis (RC) extending in a vertical direction from a hull (3); and
a lower cylindrical portion (112) having a cylindrical shape that is provided between the hull (3) and the rotor sail body (111), connected to a lower part of the rotor sail body (111), and configured to rotate integrally with the rotor sail body (111).

2. The wind propulsion device (1) of claim 1, further comprising a bearing (70A, 70B) that rotatably supports the rotor sail body (111),
wherein the lower cylindrical portion (112) is disposed to surround the bearing (70A, 70B).

3. The wind propulsion device (1) of claim 2, further comprising a bracket (80) disposed to surround the bearing (70A, 70B) and fixed to the hull (3),
wherein the lower cylindrical portion (112) is disposed to surround the bracket (80).

4. The wind propulsion device (1) of claim 3, further comprising a drive unit (41) configured to rotate the rotor sail body (111),
wherein the bracket (80) is disposed to cover the drive unit (41).

5. The wind propulsion device (1) of claim 3 or 4,
wherein the bracket (80) includes:
a body cylinder (81) having a cylindrical shape that surrounds the bearing (70A, 70B) and extends in the vertical direction; and
a flange (82) having an annular shape that extends radially outward from a lower end of the body cylinder (81) and fixed to an upper surface of the hull (3), and
wherein a lower end of the lower cylindrical portion (112) is located radially outward of an outer circumferential edge of the flange (82).

6. The wind propulsion device (1) of claim 5, wherein the lower end of the lower cylindrical portion (112) is located below an upper end of the body cylinder (81) in the vertical direction.

7. The wind propulsion device (1) of claim 5, wherein the bracket (80) further includes a stepped portion (83) having a stepped shape that extends radially inward from an upper end of the body cylinder (81) and then extends upward in the vertical direction.
